# EUROPEAN PATENT SPECIFICATION

(11) **EP 1 702 249 B1**
(45) Date of publication and mention of the grant of the patent: **10.11.2010**
(21) Application number: 04806040.4
(22) Date of filing: 14.12.2004
(51) Int. Cl.: G05D 23/10, H05B 1/02, A47J 27/21

(54) **IMPROVEMENTS RELATING TO THERMAL CONTROLS**
VERBESSERUNGEN IN BEZUG AUF THERMISCHE STEUERELEMENTE
AMELIORATIONS CONCERNANT DES CONTROLES THERMIQUES

(30) Priority: 16.12.2003 GB 0329140; 31.08.2004 GB 0419307
(43) Date of publication of application: 20.09.2006
(60) Divisional application: 10182705.3
(73) Proprietor: OTTER CONTROLS LIMITED, Buxton, Derbyshire SK17 6LA (GB)
(72) Inventor: BOUNDY, Paul, c/o Otter Controls Limited, Buxton, Derbyshire SK17 6LA (GB); HARRISON, Ron, c/o Otter Controls Limited, Buxton, Derbyshire SK17 6LA (GB); SHERRATT, Mark, c/o Otter Controls Limited, Buxton, Derbyshire SK17 6LA (GB); O'NEIL, Robert, A., c/o Otter Controls Limited, Buxton, Derbyshire SK17 6LA (GB)
(74) Representative: Cross, James Peter Archibald
(86) International application number: PCT/GB2004/005222
(87) International publication number: WO 2005/059670

(56) References cited:
- EP-A- 0 510 863
- EP-A- 0 528 656
- GB-A- 2 328 143
- GB-A- 2 329 523
- GB-A- 2 331 848

## Description

### Field of the Invention

This invention concerns improvements relating to thermal controls in general, and particularly - but not exclusively - to thermal controls for liquid heating vessels such as kettles, jugs and the like.

A particularly preferred embodiment of the invention pertains to a thermal control which can be incorporated into a liquid heating vessel to permit the user to boil liquid in the vessel, or alternatively to heat that liquid to a preset lower temperature.

### Background to the Invention

It has previously been proposed to provide a control (referred to hereafter as an element protector) which is operable to protect liquid heating vessels from a so-called element overtemperature condition. An illustrative example of one such control is the X4 control marketed by ourselves, and as described in our granted UK Patent No 2 339 088.

It has also been previously proposed to provide a control (referred to hereafter as a boil or steam control) which is operable to switch off a liquid heating element of the vessel when the liquid in the vessel boils. An illustrative example of one such control is the Z5 control marketed by ourselves and described in our granted UK Patent No 2 331 848.

Typically, both an element protector and a boil control are provided in a liquid heating vessel.

The above described and other element protectors and boil controls enable the provision of an automatic liquid boiling vessel (such as a kettle, for example) having full element overtemperature protection and in which the vessel switches off when liquid in the vessel boils.

These automatic liquid boiling vessels are suitable for boiling water for preparing tea, but it is considered by some that the flavour of herbal teas and coffee (particularly instant coffee) may be bettered by preparing that tea or coffee with water which has been heated to a temperature below boiling.

European Patent Application EP 0 528 656 relates to a liquid heating vessel such as a hot water jug comprising a boiling control for disconnecting the power to an element of the jug when water in the vessel boils and a selectively operable thermally-sensitive control of disconnecting the power when the water is at a lower temperature, say 80°C.

UK Patent Application GB 2 329 523 relates to a thermally sensitive control intended to be mounted under the base of a water heating vessel such as a kettle or hot water jug, including a manually resettable spring loaded lever arm which is tripped in response to the operation of either of two thermally sensitive actuators to open a set of contacts to disconnect the power supply to the heater. The first actuator is described to be an overheat protection or boiling sensitive bimetal actuator and the second actuator a bimetal actuator in good thermal contact with the base of the vessel. A manually operable selector selectively couples the movement of the second actuator to the spring loaded lever arm to trip the lever arm. The selector allows the lever arm to be tripped by the second actuator at a temperature below boiling.

Our previous invention, as described in granted UK Patent No 2 255 446 for example, discloses a control for a liquid heating vessel which is operable to provide the aforementioned overtemperature protection, to function as a boil control, and to enable the provision of liquid at a preset temperature below boiling.

This arrangement, therefore, provides the user with the option to boil water, for example, or merely to heat water to a temperature below boiling which is appropriate for the preparation of herbal teas, instant coffee or the like.

This arrangement, whilst functioning admirably, is relatively complex in its construction, and as such is relatively expensive to manufacture. It would be advantageous, therefore, if a less complex and hence less expensive (at least in so far as manufacturing is concerned) arrangement could be devised.

### Object and Statement of the Invention

It is an object of the present invention to avoid, or at least alleviate, one or more of the problems outlined above. In pursuance of this object, the present invention is defined in the accompanying independent claim 1. Particularly preferred features of those aspects are set out in the associated dependent claims.

The aforementioned embodiments of the present invention will now be described, by way of illustrative example only, with reference to the accompanying drawings:

### Description of the Drawings

Figure 1 is a schematic perspective view of a first thermal control constituting an embodiment of the invention based on our X4 and Z5 controls;
Figure 2 is a schematic perspective view of the arrangement depicted in Figure 1 with certain components removed for clarity;
Figure 3 is a schematic perspective view of the arrangement depicted in Figure 2 with further components removed for clarity;
Figure 4 is a schematic view in elevation of part of the aforementioned thermal control in an "off" position;
Figure 5 is a schematic view in elevation of part of the aforementioned thermal control in an "on" position permitting boiling;
Figure 6 is a schematic view in elevation of part of the aforementioned thermal control in another "on" position permitting heating only to a sub-boiling temperature;
Figure 7 is a schematic perspective view of the underside of a heating element in combination with which the thermal control of Figure 1 may be used;
Figure 8 is a schematic perspective view of a second thermal control constituting an embodiment of the invention based on our A1 control;
Figure 9 is an exploded view of the Figure 8 embodiment;
Figures 10A, 10B, 10C and 10D are enlarged partial perspective and plan views illustrating the cooperation between an on/off trip lever of the A1 control and an additional sub-boiling sensor;
Figures 11A and 11B show schematic perspective views of a power base for a cordless appliance provided with the Figure 8 control, the power base incorporating selector buttons enabling manual selection of the heating mode of the appliance;
Figures 12A and 12 are schematic top plan and sectional side elevation views showing a cordless appliance as contemplated in Figure 8 and illustrating how the push buttons in the power base interface with the control within the vessel part of the appliance; and
Figures 13A, 13B and 13C are enlarged perspective views showing more clearly how the push buttons interface with the control.

### Detailed Description of the Preferred Embodiment

A first embodiment of the present invention will now be described with particular reference to a thermal control based on a modification of our Z5 control described in GB 2 331 848. Reference will also be made, for illustration, to the X4 control that is described in GB 2 339 088 and into which the Z5 can advantageously be plugged. The X4 and Z5 controls are well known and their construction will not be described in detail herein.

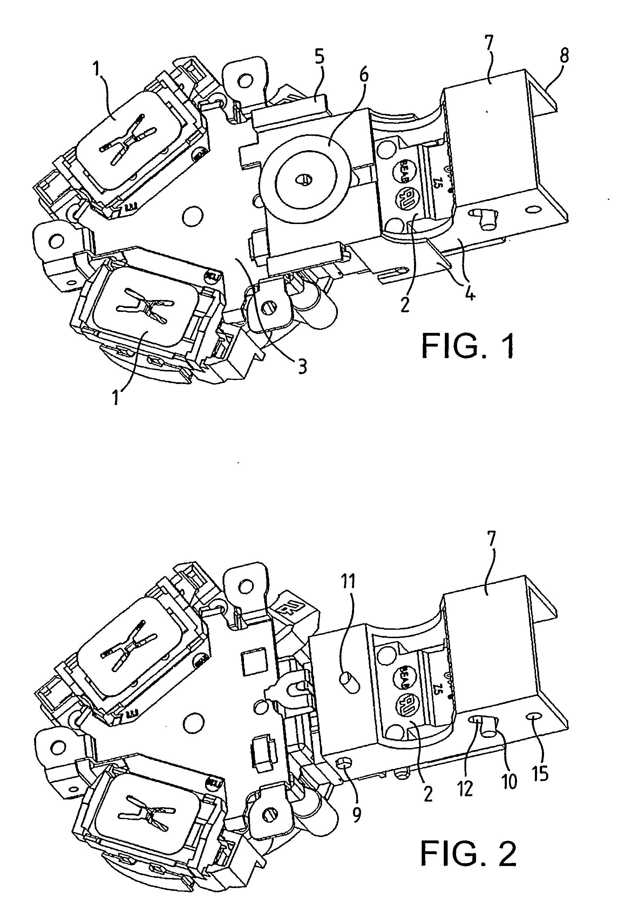

Referring now to the drawings, Figure 1 shows the element-facing (upper) side of a Z5 boil control that has been plugged into an X4 element protector control. Clearly visible are the dry boil thermal actuators 1 (in this case bimetals) of the X4 element protector control which are provided on a chassis 3 for mounting to the underside of a heating element (not shown). The Z5 boil control 2 plugs into the X4 element protector control, as is well known, and is shown carrying a further mechanism 4 which, as will be described in detail hereinafter, is operable to modify the functionality of the Z5 boil control to provide the functionality of a dual-temperature heating control.

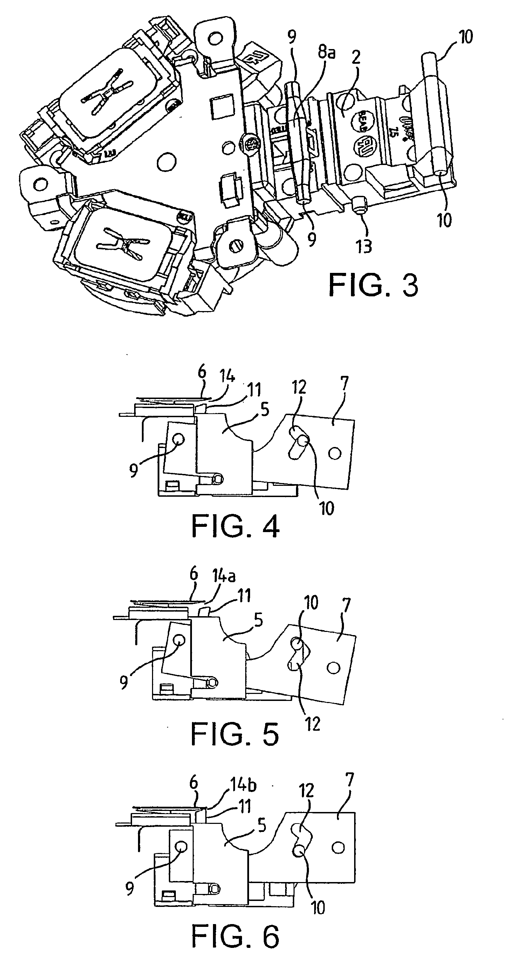

The mechanism 4 comprises a moulded plastics material extension piece 5 which is snap-fitted to the body of the boil control 2 and carries a thermal actuator 6, in this case a snap-acting, dished, bimetal disk, which is preset to change its curvature in response to rising temperature at an operating temperature below the temperature at which the liquid in the vessel boils. Currently it is proposed to preset the actuator 6 to operate at a temperature between 75 and 90°C, for example 85°C. Advantageously, the thermal actuator 6 may be mounted to the extension piece 5 by means of a method similar to that described in our pending UK Patent Application No 2 397 438 with reference to Figures 6 to 8 thereof.

The bimetal disk 6 provides a manually-selectable alternative means of causing operation of the boil control 2, namely at a sub-boiling temperature. For selecting whether the bimetal disk 6 or the bimetal in the boil control 2 is operative to switch off the boil control, a rocking lever 7 is mounted on the boil control 2 and forms part of the aforementioned mechanism 4. the rocking lever 7 can be moved manually by means of a linkage (not shown) attached at one end to a pair of holes 15 (one of which is visible) provided in the rocking lever 7 and at the other end to a manually operable actuator (also not shown) of an appliance in which the control is fitted. Alternatively, the rocking lever 7 itself may be extended (at 8) to form such a manually operable actuator. As will be described, the rocking lever 7 is selectively moved for selecting the liquid heating mode of a vessel in which the control is incorporated.

Figure 2 is a perspective view of the arrangement depicted in Figure 1, illustrating - for clarity - the boil control 2 with the thermal actuator 6 and the aforementioned extension piece 5 removed to illustrate the rocking lever 7.

As shown, the rocking lever 7 is pivoted at its forward end on two pegs 9 which extend from opposite sides of a trip lever 8a of the boil control 2, and carries a push rod 11 for cooperation with the thermal actuator 6 as will later be described. Two lugs 10 (only one of which is visible) are provided as extensions to the body of the boil control 2, and are configured to each engage with a V shaped slot 12 provided in respective sides of the rocking lever towards its rearward end. These features of the steam control can be seen more clearly in Figure 3, which shows the control with the rocking lever 7 removed. The rocking lever 7 can be pivoted about the pegs 9 with the lugs 10 moving in the V shaped slots 12 and this movement of the rocking lever 7 can determine whether the thermal actuator 6 or the thermal actuator in the boil control 2 will determine the condition of the trip lever 8a of the boil control 2 and thus, in turn, determine the temperature at which the boil control will switch off the heating element of an associated vessel.

Also shown in Figure 3 are two further pegs 13 (again, only one of which is visible) on the body of the boil control which function as a means for attachment of the extension piece 5 to the boil control 2.
Figures 4, 5 and 6 are side views in elevation of the boil control 2 separated from the element protector, but with the thermal actuator and its mounting extension 5 in place. These views illustrate the action of the control.
Figure 4 shows the boil control in its "off" state in which the boil control prevents the supply of electricity to the heating element of an associated vessel. In this state, the rocking lever 7 is in its central position and the lugs 10 are each located at the apex of their associated "V" slots 12. As will later be described, to move to this position the trip lever 8a of the boil control is pulled forward into its off position by the action of the lugs 10 sliding in their respective V slots 12 which pulls the pegs 9 to the left as illustrated in the Figure. In this position the thermal actuator 6 (preferably a bimetal) may or may not be in its hot state, (convex side downwards), depending on whether the kettle has been manually switched off or is cold, or if the bimetal is hot. In the figure the actuator 6 is shown in its cold state, and clearly visible is a gap 14 between the edge of the bimetal 6 and the push rod 11 provided on the rocking lever 7. As will be described, the size of this gap 14 determines whether or not the condition of the bimetal 6 has any effect upon the trip lever of the boil control.
Figure 5 shows the control in a first of its two "on" states in which the boil control permits heating to boiling. In this state, the rocking lever 7 has been manually rotated (right hand rearward end downwards as illustrated in the Figure) from the position shown in Figure 4 so that the lugs 10 are at the upper end of their respective V slots 12. Movement of the lever in this way causes the trip lever 8a of the boil control to be pulled rightwards by the pegs 9 (again as illustrated) which switches on the control, and hence permits the supply of electrical power to the heating element (not shown).

In the Figure 5 condition, the gap 14a between the push rod 11 and the thermal actuator 6 is so large that when the actuator 6 changes from its cold to its hot state it does not contact the push rod 11 and thus can have no influence on the rocking lever. The effect of this is that, whilst the thermal actuator 6 will operate (i.e. snap between oppositely curved states) at a preset sub-boiling temperature , this will have no effect upon the boil control and the boil control itself is the only component operable to switch off the liquid heating vessel when the liquid in that vessel boils. As the boil control operates to switch off the vessel, so the boil control trip lever 8a will cause the rocking lever 7 to return to the "off" position depicted in Figure 4.

Figure 6 shows the boil control in the second of its two "on" states in which heating only to a sub-boiling temperature is permitted. In this state the rocking lever 7 has been manually rotated (right hand rearward end upwards as shown in the Figure) from the position shown in Figure 4 so that the lugs 10 are at the lower ends of their respective V slots 12. This movement of the rocking lever 7 causes the trip lever 8a of the boil control to be pulled rightwards (again as illustrated in the Figure) by the pegs 9, and as a result causes the boil control to be switched on. In this position, however, the push rod 11 has moved towards the thermal actuator 6, such that a narrower gap 14b is provided between the push rod and actuator. The effect of this is that, when the actuator 6 operates at its preset temperate and reverses its curvature, it pushes on the push rod 11 and thereby drives the rocking lever 7 back to the off position shown in Figure 4. This switches off the boil control and thereby de-energises the heating element, without the liquid in the vessel having been heated to its boiling point. In effect, the thermal actuator 6 operates to switch off the boil control before the liquid in the vessel has reached a sufficient temperature to cause the boil control to operate of its own volition.

A particular, albeit ancillary, advantage of this arrangement is that, when the control is in its sub-boiling mode, the boil control remains available to switch off the liquid heating vessel in the event that the thermal actuator 6 should fail to operate at the designed sub-boiling temperature. This arrangement therefore provides additional safety. Another advantage of the described arrangement is that the extension piece 5 with the bimetal 6 and also the rocking lever 7 can simply be clipped onto the boil control 2 which enables the same boil control to be used both for the described embodiment and for an arrangement lacking the components 5, 6 and 7.

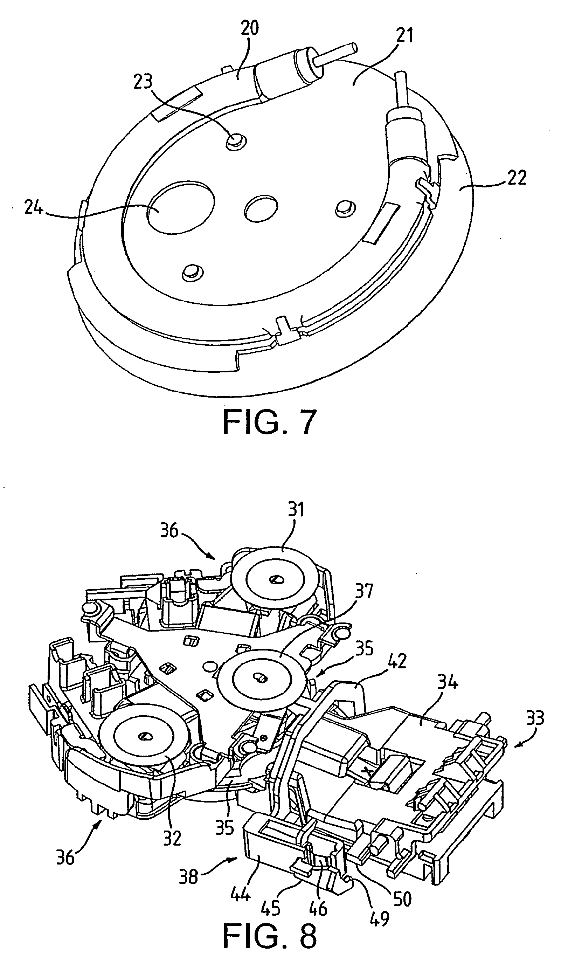

Figure 7 shows the underside of a preferred version of an underfloor heating element which is particularly suitable for use with the teachings of the invention as implemented by means of the aforementioned X4 and Z5 combination, or similar. As is well known, underfloor heating elements comprise a sheathed heating element clamped, clenched or otherwise attached to the underside of an element plate.

Referring now to Figure 7, there is shown a stainless steel plate 22 which can form the bottom of a liquid heating vessel. To this plate 22 there is attached, for example by soldering, a heat diffuser plate of aluminium 21 and the heating element 20 itself. The heat diffuser plate 21 is provided with a number of attachment features 23 (in this instance, three attachment features) by means of which the chassis 3 of the X4 element protector control may be secured to the element.

In the context of the aforementioned combination of underfloor element protector and steam control, we have found that improved performance may be obtained by providing a location for the actuator 6 of the boil control which is somewhat isolated from the direct heat generated by the element 20. This location is shown in Figure 7 as comprising a hole 24 in the aluminium diffuser plate 21, the effect of this being that the actuator is directly in contact with the stainless steel plate 22 when the boil control and element protector are assembled to the element. As the stainless steel plate 22 is relatively thin (typically less than 0.5 mm) and of low thermal conductivity, sideways conduction of heat from the element 20 to the thermal actuator 6 is reduced. The effect of this is that the temperature of the liquid within the vessel can be sensed by the actuator 6 through the thickness of the plate whilst avoiding, or at least mitigating, direct heating of the actuator by the element 20.

Other methods of limiting the direct heat transfer from the element include locally thinning the diffuser plate 21, or punching out a ring around the thermal actuator location leaving only small tags to support the location during assembly. By means of these improvements it is possible to limit the variation in water temperature which would otherwise occur with varying water volumes.

Equivalent arrangements could be based upon thick film heating elements.

A second embodiment of the invention will now be described, this embodiment being based upon a modification of our A1 control which is described in our UK Patent Application No 2 397 438 to which reference may be made for a more complete description. The version of the A1 control upon which the modification described in the following is based has an integral boil control adapted to switch off the supply of electricity to an associated heating element when boiling of liquid is achieved in an associated vessel; such an A1 control is shown in Figures 6 to 8 of GB 2 397 438 abovementioned where there are two heating element overtemperature protection actuators (e.g. bimetals), each with an associated switch for switching off the current supply to the heating element in the event of this overheating, and there is furthermore a steam-sensing actuator (e.g. a bimetal) which cooperates with an overcentre mounted trip lever to open the abovementioned switches and thereby disconnect the heating element from its electrical supply in response to the boiling of water in the associated vessel.

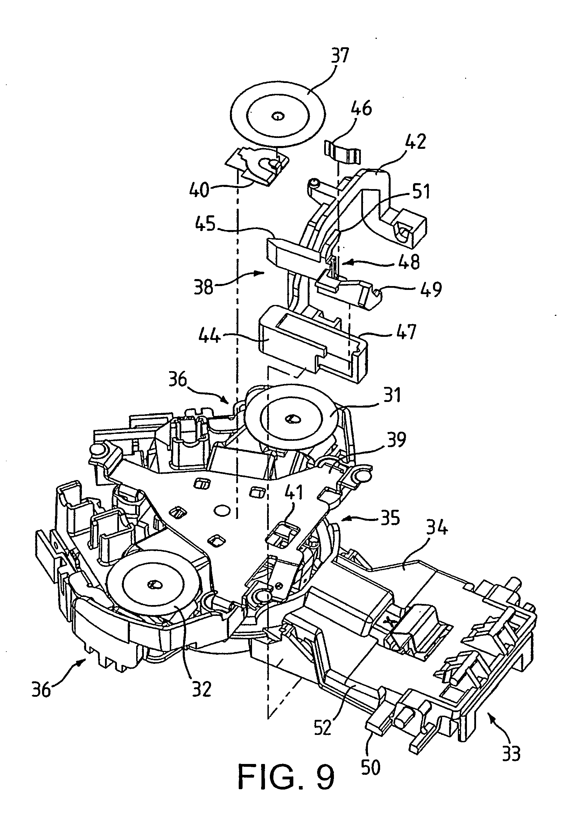

Figure 8 shows the second embodiment in perspective view and Figure 9 is an exploded view. The basic A1 control has two overtemperature protection bimetals 31 and 32 arranged to be spring loaded against the underside of a planar heating element so as to be responsive to the element temperature and has an integral steam sensor 33 with an overcentre-mounted trip lever 34 which is responsive to a third, steam sensing bimetal (not shown) and has extended limbs 35 which cooperate with switches 36 associated with the bimetals 31, 32. This basic A1 control is modified, in accordance with the teachings of the present invention, by the addition of a fourth bimetal 37 which is set to operate at a sub-boiling temperature, 85° for example, and by provision of an arrangement 38 which can selectively link the movements of this fourth bimetal 37 with the trip lever 34.

An exploded view of the embodiment is shown in Figure 9 and shows the mounting of the fourth bimetal 37 to a metal chassis plate 39 of the control by means of a spring clip 40 which engages with an aperture 41 in the chassis plate 39. The fourth bimetal 37 cooperates with a moulded plastics material yoke 42 which is pivotally mounted at its opposed ends on the steam sensing part 33 so as to be capable of movement between limits established by the fourth bimetal 37, in one direction, and the body moulding of the steam control part 33, in the opposite direction.

One end of the yoke 42 is formed with a receptacle 44 which is adapted to receive a bistable lever 45 so that it is capable of pivotal movement, transversely to the pivotal movement of the yoke 42, between two stable positions on opposite sides of an intermediate unstable position. The bistability of the lever 45 is achieved by provision of a leaf spring 46 biased between V-shaped grooves 47,48 provided on the receptacle 44 and on the lever 45 respectively. A formation 49 is provided on the bistable lever 45 for cooperation with a complementary formation 50 provided on the trip lever 34 of the steam sensor part 33, depending upon the position of the bistable lever 45, and a further formation 51 on the bistable lever 45 cooperates with an inclined cam surface 52 on the steam sensor trip lever 34, again depending upon the position of the bistable lever 45.

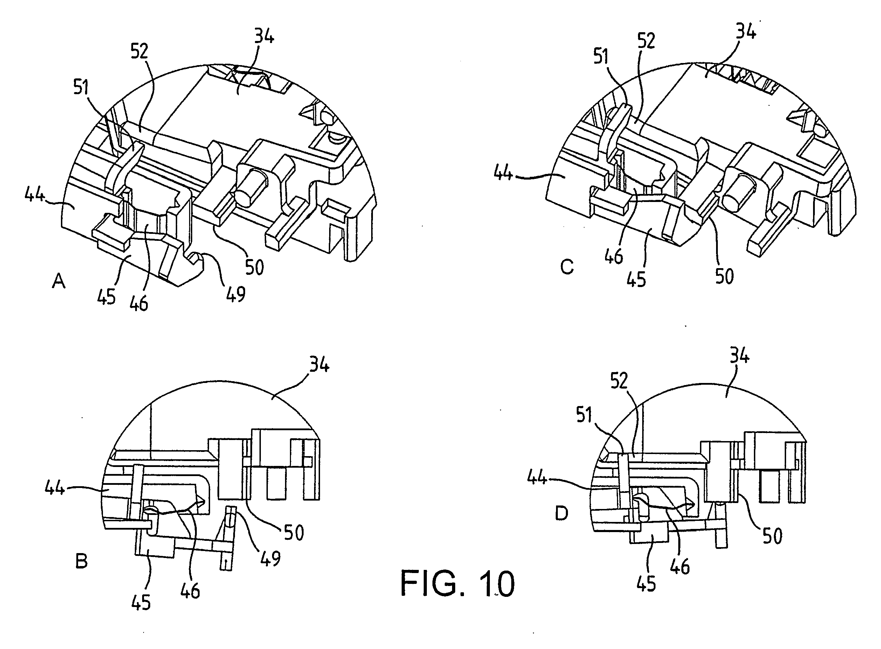

Figures 10A to 10D show how the bistable lever 45 cooperates with the steam sensor trip lever 34. Yet to be described is the means whereby the bistable lever 45 can be pivoted selectively between its two stable positions, but it will be understood that this means determines whether or not movement of the fourth bimetal 37 in response to its sensing of a predetermined sub-boiling temperature will be transmitted to the steam sensor trip lever 34. For heating water to this sub-boiling temperature, for example for making coffee, the bistable lever 45 will be arranged to interact with the steam sensor trip lever 34 and, for boiling water, there will be no such interaction. Figures 10A and 10B show the situation where the bistable lever 45 cannot interact with the steam sensor trip lever 34, and Figures 10C and 10D show the situation where the bistable lever 45 can interact with the steam sensor trip lever 34, the formation 49 on the bistable lever 45 being capable of engaging the formation 50 on the steam sensor trip lever 34 only in the last-mentioned situation of Figures 10C and 10D. In this last-mentioned situation, the movement of the fourth bimetal 37 will cause the yoke 42 to pivot so as to cause the bistable lever 45 to lift the trip lever 34 and thereby disconnect the heating element from its electrical supply by opening the switches 36 associated with the element overtemperature sensing bimetals 31 and 32. The lifting of the steam sensor trip lever 34 by the bistable lever 45 moves the trip lever 34 through the central unstable position of its own overcentre mounting and, as it continues to move of its own volition, so the formation 51 on the bistable lever 45 is contacted by cam surface 52 so as to reset the bistable lever 45 into the condition shown in Figures 10A and 10B.

The described arrangement thus enables water to be heated, selectively, either to a sub-boiling temperature determined by the temperature setting of the fourth bimetal 37, or to boiling in which case the fourth bimetal 37 is selectively rendered ineffective and termination of heating is effected solely by the operation of the steam sensor 33. In the following, the means will be described whereby selection between these two heating modes is effected.

As is well known, the A1 control is designed for use with a cordless water heating vessel comprising a power base adapted to be connected to the electricity supply and a vessel proper adapted to be set down on the power base for powering the vessel heating element via the base, complementary electrical connectors being provided on the power base and on the vessel proper for this purpose. The A1 control has an integral 360° connector part (see Figure 5 of GB 2 397 438 in this connection) and the power base has an upstanding 360° complementary connector part for cooperation with the vessel-mounted connector part.

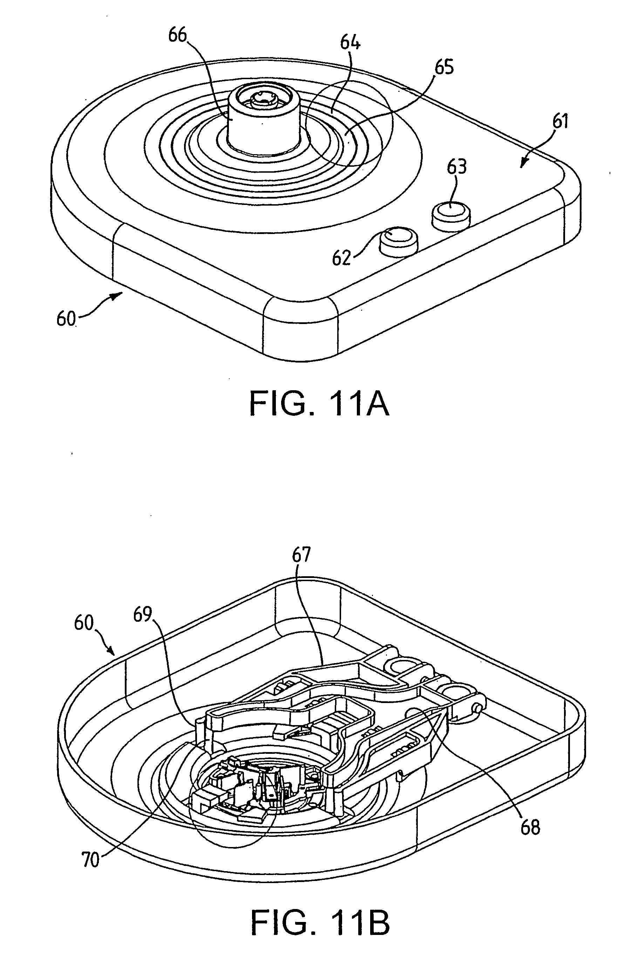

Figures 11A and 11B show perspective views of an exemplary power base 60, Figure 11A showing the upper side of the power base and Figure 11B showing the underside of the power base with a protective cover removed. Whereas conventional power bases are shaped in plan view to conform substantially to the generally circular footprint of the vessel proper, in the illustrated arrangement this is not the case and the power base is designed to provide a portion 61 which extends beyond the vessel footprint so as to provide for the mounting of readily accessible control buttons 62 and 63 for selecting, respectively, the sub-boiling heating mode useful for making coffee and the boiling mode useful for making tea.

The control buttons 62 and 63 determine the positions, raised or lowered, of two rings 64 and 65 provided on the power base 61 concentric with its 360° electrical connector part 66. As will be explained, the positions of the rings 64, 65 determine the heating mode of the vessel by determining the position of the abovementioned bistable lever 45 and the position of the steam sensor trip lever 34, push rods being mounted in and projecting from a base part of the vessel proper for cooperation with the rings 64, 65 and transferring their positions to the bistable lever 45 and the steam sensor trip lever 34.

Referring to Figure 11B, this shows the mechanical linkage between the push buttons 62, 63 and the rings 64, 65. The rings 64, 65 are mounted in the power base 60 with a spring bias, details of which are not shown, so that each ring can be pushed against its spring bias so as to project above the surface of the power base and will resile to a position flush with the surface of the power base when the pushing impetus is removed. The pushing impetus is provided by depression of the push buttons 62, 63, bifurcated pivotally-mounted links 67 and 68 terminating in push rods 69 and 70 aligned with the rings 64 and 65 being coupled to the push buttons. The link 67 partially underlies the link 68 (as viewed in Figure 11B) so that when push button 62, the sub-boiling (coffee) temperature selector button, is depressed, both links are moved so as to raise both of the rings 64, 65. When push button 63, the boiling (tea) temperature selector button, is depressed, only the link 68 is pivoted and only the inner ring 65 is raised. As previously mentioned, when the push buttons are released, the respective rings resile to positions flush with the upper surface of the power base 60.

When an appropriate vessel is set down upon the power base 60, push rods that are provided in the bottom of the vessel and project therefrom cooperate with the rings 64, 65 to determine the heating mode of the vessel. There are two such push rods, each cooperating with a respective one of the rings, and one of the push rods is arranged to cooperate at its upper end with the abovementioned bistable lever 45 for selecting a sub-boiling (coffee) heating mode, whilst the other push rod is arranged to cooperate at its upper end with one of the limbs 35 of the steam sensor trip lever 34. Namely, raising of the ring 64 by depression of the sub-boiling (coffee) push button 62 causes the bistable lever 45 to pivot from its inoperative position where the formation 49 cannot engage the formation 50 on the steam sensor trip lever, to its operative position where it can. It has to be remembered, in this connection, that when the fourth (sub-boiling) bimetal 37 actuates the steam sensor trip lever 34 through the bistable lever 45, the bistable lever 45 is automatically reset into its inoperative condition which, therefore, is its normal rest condition. In similar manner, the normal rest condition of the steam sensor trip lever 34 will be its inoperative position where it has tripped and opened the switches 36 associated with the bimetals 31 and 32 of the control. In order to move the steam sensor trip lever 34 into a position where the switches 36 are closed and capable of supplying power to the vessel heating element, the ring 65 in the power base 60 has to be raised by depression of one or other of the push buttons 62, 63.

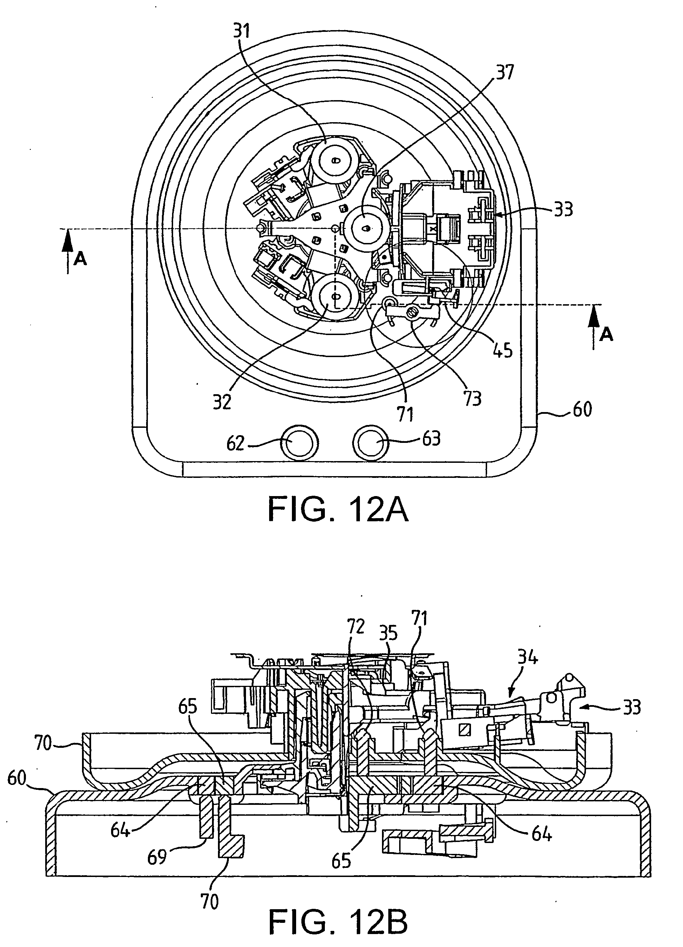

Referring to Figures 12A and 12B, these illustrate how the push buttons 61, 62 on the power base 60 interact with the control in the vessel. Figure 12A is a schematic plan view showing the modified A1 control fitted into the bottom of a water heating vessel and Figure 12B is an enlarged cross-sectional view taken on the line A...A in Figure 12A. As shown in Figure 12B, the vessel has a bottom part 70, formed of plastics material for example, shaped to seat upon the upper surface of the power base 60 with the 360° base and vessel connectors operatively engaged. Two push rods 71 and 72 are provided in the vessel bottom part 70 and are located to register, respectively, with the rings 64 and 65 of the power base 60 so that raising of the rings, as described hereinbefore, causes the push rods 71 and 72 to be raised. The push rod 71 cooperates, when it is raised, with one end of a pivotally-mounted link 73 (see Figure 12A) so as to cause the link to rotate counter-clockwise. The other end of the link 73 contacts the bistable lever 45 so that the lever 45 is driven to its operative position when the push rod 71 is raised. The other push rod 72 underlies one of the limbs 35 of the steam sensor trip lever 34 so as to reset the steam sensor 33 when the push rod 72 is raised by depression of either of the push buttons 62, 63 to raise the ring 65.

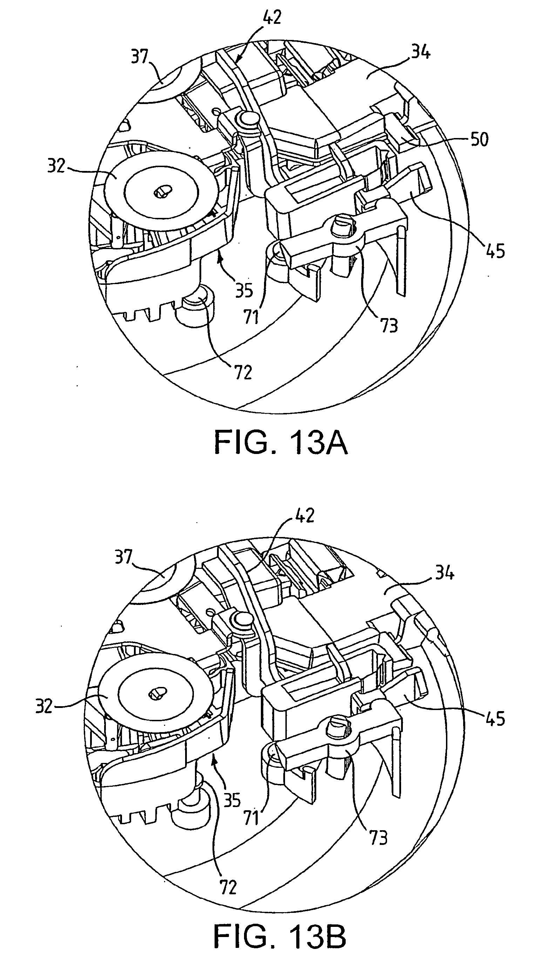

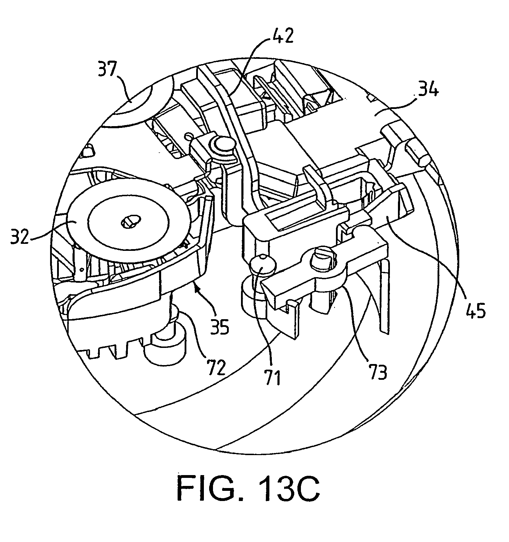

Figures 13A, 13B and 13C show in perspective, enlarged view some of the details provided in Figures 12A and 12B. The positions of the push rods 71 and 72 in relation to the pivotal link 73 and the limb 35 of the steam sensor trip lever 34 are made particularly clear in these views. As shown in Figure 13A, both push rods 71, 72 are depressed and both the steam sensor trip lever 35 and the bistable lever 45 are in their inoperative position; in this condition, the control is switched off and the supply of power through the control to the vessel heating element is inhibited. As shown in Figure 13B, the push rod 72 has been raised by depression of the boil push button 63 on the power base and this lifts the limb 35 of the steam sensor trip lever 34 so as to switch the control into its on condition wherein the heating of water in the vessel is determined solely by the steam sensor 33, the sub-boiling bistable lever 45 being in its inoperative position, and the water will be heated to boiling whereupon the steam sensor 33 will switch off the heating element. As shown in Figure 13C, both push rods 71 and 72 have been raised by depression of the sub-boiling push button 62 and this places both the trip lever 34 of the steam sensor and the bistable lever 45 into their operative conditions so that water can be heated in the vessel only to a sub-boiling temperature determined by the temperature setting of the fourth bimetal 37.

The above-described second embodiment is, as aforesaid, based on a modification of a particular version of our A1 control and, as can be seen most readily from Figure 9, the modification merely requires the retrofitting of the fourth bimetal 37 and the yoke 42 incorporating the bistable lever 45 to the basic A1 control. This has the advantage that the same basic A1 control can be used by itself, namely without the modifications, in a water boiling vessel lacking a sub-boiling facility, and can be used, with the modifications, in a vessel as above-described having boiling and sub-boiling facilities. The same advantage can be attained with the first-mentioned embodiment which can, similarly, be manufactured by retrofitting parts to a standard Z5 steam sensor.

It will be apparent from the above that the teachings of this invention provides a similar function to the control described in our granted UK Patent No 2 255 446, but without the complication of a changeover switch and separate thermostat.

It will also be apparent that modifications may be made to the particular embodiments described without departing from the spirit and scope of the invention claimed.

For example, in the above described arrangements the control is intended to permit the heating of water to a predetermined temperature lower than the boiling point, whereupon the control will then switch off. However, the controls could be modified to allow the sub-boiling actuator to cycle and hence switch the heating element both on and off (by turning the boil control both on and off) so as to maintain the water at or close to the desired lower temperature. Such an arrangement could, for example, be implemented in the first embodiment by extending the aforementioned push rod 11 so that the edge of the actuator 6 is located in a slot formed in the free end of the rod to permit the actuator to drive the rod in both directions. A similar modification could be made to the second embodiment.

Furthermore, whereas in the examples shown the element power is switched off when the water boils or the predetermined temperature is reached, it is possible that the element power is reduced rather than switched off to give a keep-warm function or a simmer function. Indeed, a third ring could be added to the power base of the second embodiment to enable such a reduced power function. Alternatively, and preferably, a linkage could be provided so that the three functions could be achieved using the described two rings; for example, the inner ring could provide the lower temperature, the outer ring could provide-boil, and both rings together would provide keep-warm. Such a linkage could be based on a push rod mounted on a sliding pivot, so that it rotates in one direction for one ring, in the other direction for the other ring, and rises straight up for both. These motions would then be linked to the control to activate the required function.

It will also be appreciated that whilst the preferred embodiment described above relates to the combination of our X4 and Z5 controls and to our A1 control, the teachings of the invention could equally be employed with any of a number of alternative controls. For example, whereas the embodiments described have incorporated 360° connector systems, the invention could be applied to non-360° systems such as our CS2 which is described in our UK Patent No 2 241 390 in which case the means for transmitting push button movements from the power base to the vessel would not require rings, but a simple system of inter-engaging push rods could be used. The teachings of the present invention should therefore not be read as being limited solely to the particular controls described herein.

## Claims

1. A cordless liquid heating appliance comprising a vessel part provided; with an electric heating element and a power base (60) for connection to an electrical supply, the vessel part and the power base (60) having cooperating electrical connectors (66) enabling the heating element to be powered via the power base (60) when the vessel part is operatively associated with the power base (60), the appliance having, in the vessel part, a control including switch means coupled to the vessel heating element for determining the supply of electrical power to the heating element,
the appliance being **characterised by** a first thermally-responsive actuator (2, 31, 32) responsive to boiling of liquid in the vessel for operating said switch means, a second thermally responsive actuator (6, 37) responsive to the liquid attaining a predetermined sub-boiling temperature for operating said switch means, and means (64, 65) enabling a selection to be made as to which of said first and second thermally- responsive actuators will operate said switch means, and the appliance having, in the power base (60), means for making said selection, there being cooperating means in the vessel part and in the power base (60) whereby, when the vessel part is operatively associated with the power base (60), operation of the selection means in the power base causes corresponding operation of said enabling means in the vessel part.

2. A cordless liquid heating appliance according to claim 1, wherein the cooperating means in the vessel part comprises a push rod (71, 72) projecting through the bottom of the vessel part, and the power base (60) having pusher means arranged to cooperate with said push rod (71, 72) by pushing the same into the vessel part when the power base selection means is operated.

3. A cordless liquid heating appliance according to claim 2, wherein the power base selection means comprises a push button (62, 63).

4. A cordless liquid heating appliance according to claim 2 or 3, wherein the cooperating electrical connectors on the vessel part and on the power base are 360° connectors and the pusher means in the power base comprises a ring (64, 65) concentric with the power base 360° connector.

5. A cordless liquid heating appliance according to claim 4, wherein the power base (60) has a plurality of concentric pusher rings associated with the power base selection means, and the vessel part has a corresponding plurality of push rods (71, 72) each arranged to be operated by a particular one of said pusher rings (64, 65).

6. A cordless liquid heating appliance according to any of claims 1 to 5, wherein said switch means comprises the trip lever of a boil control responsive to said first thermally-responsive actuator, and said second thermally-responsive actuator is capable of causing operation of said trip lever in dependence upon the condition of said selection means.

7. A cordless liquid heating appliance according to claim 6, wherein the control further comprises at least one third thermally- responsive actuator responsive to the vessel heating element attaining a predetermined excessively high temperature, said third thermally- responsive actuator determining the status of an associated pair of switch contacts which is also associated with the boil control trip lever, and the selection means in the power base is operable to reset the boil control trip lever.

8. A cordless liquid heating appliance according to claim 7, wherein the selection means in the power base (60) comprises a first means for resetting the trip lever and a second means for determining the capability of the second thermally-responsive actuator to operate the trip lever.

9. A cordless liquid heating appliance according to any of claims 6 to 8, wherein said second thermally-responsive actuator and its associated interface with the trip lever of the boil control are formed as clip-on attachments.

10. A cordless liquid heating appliance according to any of claims 1 to 9, wherein said cooperating means includes a movable component mounted to the bottom of the vessel part inside the same, said component being selectively movable by operation of the selection means in the power base (60) to determine the capability of said second thermally-responsive actuator to operate said switch means.

## Patentansprüche

1. Kabelloses Flüssigkeitserhitzungsgerät, umfassend ein Behälterteil, das mit einem elektrischen Heizelement und einem Stromsockel (60) zum Anschluss an eine Stromversorgung versehen ist, wobei das Behälterteil und der Stromsockel (60) zusammenwirkende elektrische Anschlüsse (66) aufweisen, die es ermöglichen, das Heizelement über den Stromsockel (60) zu speisen, wenn das Behälterteil mit dem Stromsockel (60) betriebsfähig verbunden ist, und das Gerät im Behälterteil ein Steuerelement, das Schaltmittel umfasst, die mit dem Behälterheizelement gekoppelt sind, zum Bestimmen der Zufuhr von elektrischer Energie zum Heizelement aufweist,
das Gerät **gekennzeichnet ist durch** ein erstes auf Wärme ansprechendes Betätigungselement (2, 31, 32), das auf ein Sieden von Flüssigkeit im Behälter anspricht, zum Betätigen der Schaltmittel, ein zweites auf Wärme ansprechendes Betätigungselement (6, 37), das auf die Flüssigkeit anspricht, die eine vorgegebene Temperatur unter dem Siedepunkt erreicht, zum Betätigen der Schaltmittel, und Mittel (64, 65), die es ermöglichen, dass eine Auswahl im Hinblick darauf getroffen wird, welches der ersten und zweiten auf Wärme ansprechenden Betätigungselemente die Schaltmittel betätigt, und wobei das Gerät im Stromsockel (60) Mittel zum Treffen der Auswahl aufweist, wobei zusammenwirkende Mittel im Behälterteil und im Stromsockel (60) vorhanden sind, wodurch, wenn das Behälterteil mit dem Stromsockel (60) betriebsfähig verbunden ist, die Betätigung der Auswahlmittel im Stromsockel eine entsprechende Betätigung der Aktivierungsmittel im Behälterteil bewirkt.

2. Kabellosen Flüssigkeitserhitzungsgerät nach Anspruch 1, wobei das zusammenwirkende Mittel im Behälterteil eine Druckstange (71, 72) umfasst, die durch den Boden des Behälterteils vorsteht, und der Stromsockel (60) Drückermittel aufweist, die so angeordnet sind, dass sie mit der Druckstange (71, 72) durch Drücken derselben in das Behälterteil zusammenwirken, wenn das Auswahlmittel des Stromsockels betätigt wird.

3. Kabelloses Flüssigkeitserhitzungsgerät nach Anspruch 2, wobei das Auswahlmittel des Stromsockels einen Druckknopf (62, 63) umfasst.

4. Kabelloses Flüssigkeitserhitzungsgerät nach Anspruch 2 oder 3, wobei die zusammenwirkenden elektrischen Anschlüsse auf dem Behälterteil und auf dem Stromsockel 360°-Anschlüsse sind, und das Drückermittel im Stromsockel einen Ring (64, 65) umfasst, der konzentrisch zum 360°-Anschluss des Stromsockels ist.

5. Kabelloses Flüssigkeitserhitzungsgerät nach Anspruch 4, wobei der Stromsockel (60) eine Mehrzahl von konzentrischen Drückerringen aufweist, die mit den Auswahlmitteln des Stromsockels verbunden sind, und das Behälterteil eine entsprechende Mehrzahl von Druckstangen (71, 72) aufweist, die jeweils so angeordnet sind, dass sie durch einen bestimmten der Drückerringe (64, 65) betätigt werden.

6. Kabellosen Flüssigkeitserhitzungsgerät nach einem der Ansprüche 1 bis 5, wobei das Schaltmittel den Auslösehebel eines Siedepunktsteuerelements umfasst, der auf das erste auf Wärme ansprechende Betätigungselement anspricht, und das zweite auf Wärme ansprechende Betätigungselement fähig ist, die Betätigung des Auslösehebels in Abhängigkeit vom Zustand der Auswahlmittel zu bewirken.

7. Kabelloses Flüssigkeitserhitzungsgerät nach Anspruch 6, wobei das Steuerelement ferner mindestens ein drittes auf Wärme ansprechendes Betätigungselement umfasst, das auf das Behälterheizelement anspricht, das eine vorgegebene übermäßig hohe Temperatur erreicht, wobei das dritte auf wärme ansprechende Betätigungselement den Status eines verbundenen Paares von Schaltkontakten bestimmt, das auch mit dem Auslösehebel des Siedepunktsteuerelements verbunden ist, und das Auswahlmittel im Stromsockel so betätigt werden kann, dass es den Auslösehebel des Siedepunktsteuerelements zurückstellt.

8. Kabelloses Flüssigkeitserhitzungsgerät nach Anspruch 7, wobei das Auswahlmittel im Stromsockel (60) ein erstes Mittel zum Zurückstellen des Auslösehebels und ein zweites Mittel zum Bestimmen der Fähigkeit des zweiten auf Wärme ansprechenden Betätigungselements zur Betätigung des Auslösehebels umfasst.

9. Kabelloses Flüssigkeitserhitzungsgerät nach einem der Ansprüche 6 bis 8, wobei das zweite auf Wärme ansprechende Betätigungselement und seine zugehörige Schnittstelle mit dem Auslösehebel des Siedepunktsteuerelements als Aufsteckbefestigungen ausgebildet sind.

10. Kabelloses Flüssigkeitserhitzungsgerät nach einem der Ansprüche 1 bis 9, wobei das zusammenwirkende Mittel eine bewegliche Komponente umfasst, die am Boden des Behälterteils innerhalb desselben montiert ist, wobei die Komponente durch Betätigung der Auswahlmittel im Stromsockel (60) selektiv beweglich ist, um die Fähigkeit des zweiten auf wärme ansprechenden Betätigungelements zur Betätigung der Schaltmittel zu bestimmen.

## Revendications

1. Appareil sans fil de chauffage de liquide comprenant une partie de cuve équipée d'un élément chauffant électrique et d'une base d'alimentation (60) servant au le raccordement à une alimentation électrique, la partie de cuve et la base d'alimentation (60) ayant des connecteurs électriques coopérants (60) permettant à l'élément chauffant d'être alimenté via la base d'alimentation (60) lorsque la partie de cuve est associée de manière opérationnelle à la base d'alimentation (60), l'appareil ayant, dans la partie de cuve, une commande comprenant des moyens de commutateur couplés à l'élément chauffant de la cuve qui sert à déterminer l'alimentation de courant électrique à l'élément chauffant,
l'appareil étant **caractérisé par** un premier actionneur thermosensible (2, 31, 32) qui répond à l'ébullition du liquide dans la cuve en actionnant lesdits moyens de commutateur, un deuxième actionneur thermosensible (6, 37) qui répond à une température de sous-ébullition prédéterminée atteinte par le liquide en actionnant lesdits moyens de commutateur, et des moyens (64, 65) permettant de réaliser une sélection desquels desdits premier et deuxième actionneurs thermosensibles actionneront lesdits moyens de commutateur, et l'appareil ayant, dans la base d'alimentation (60), des moyens pour réaliser ladite sélection, des moyens de coopération dans la partie de cuve et dans la base d'alimentation (60) étant présents moyennant quoi, lorsque la partie de cuve est associée de manière opérationnelle à la base d'alimentation (60), le fonctionnement des moyens de sélection dans la base d'alimentation provoque le fonctionnement correspondant desdits moyens d'autorisation dans la partie de cuve.

2. Appareil sans fil de chauffage de liquide selon la revendication 1, dans lequel les moyens de coopération dans la partie de cuve comprennent une tige de poussée (71, 72) faisant saillie à travers le fond de la partie de cuve, et la base d'alimentation (60) ayant des moyens de poussoir agencés pour coopérer avec ladite tige de poussée (71, 72) en poussant cette dernière dans la partie de cuve lorsque les moyens de sélection de base d'alimentation sont actionnés.

3. Appareil sans fil de chauffage de liquide selon la revendication 2, dans lequel les moyens de sélection de base d'alimentation comprennent un bouton poussoir (62, 63).

4. Appareil sans fil de chauffage de liquide selon les revendications 2 ou 3, dans lequel les connecteurs électriques coopérants sur la partie de cuve et sur la base d'alimentation sont des connecteurs à 360° et les moyens de poussoir dans la base d'alimentation comprennent une bague (64, 65) concentrique avec le connecteur à 360° de la base d'alimentation.

5. Appareil sans fil de chauffage de liquide selon la revendication 4, dans lequel la base d'alimentation (60) présente une pluralité de bagues de poussoir concentriques associées aux moyens de sélection de base d'alimentation et la partie de cuve a une pluralité correspondante de tiges de poussée (71, 72), chacune agencée pour être actionnée par une bague particulière desdites bagues de poussoir (64, 65).

6. Appareil sans fil de chauffage de liquide selon l'une quelconque des revendications 1 à 5, dans lequel lesdits moyens de commutateur comprennent le levier de déclenchement d'une commande d'ébullition sensible audit premier actionneur thermosensible, et ledit deuxième actionneur thermosensible peut provoquer l'actionnement dudit levier de déclenchement en fonction de la condition desdits moyens de sélection.

7. Appareil sans fil de chauffage de liquide selon la revendication 6, dans lequel la commande comprend en outre au moins un troisième actionneur thermosensible, sensible à une température excessivement élevée prédéterminée atteinte par l'élément chauffant de la cuve, ledit troisième actionneur thermosensible déterminant l'état d'une paire associée de contacts de commutation qui est également associée au levier de déclenchement de commande d'ébullition, et les moyens de sélection dans la base d'alimentation peuvent être actionnés pour réinitialiser le levier de déclenchement de commande d'ébullition.

8. Appareil sans fil de chauffage de liquide selon la revendication 7, dans lequel les moyens de sélection dans la base d'alimentation (60) comprennent des premiers moyens pour réarmer le levier de déclenchement et des deuxièmes moyens pour déterminer la capacité du deuxième actionneur thermosensible à actionner le levier de déclenchement.

9. Appareil sans fil de chauffage de liquide selon l'une quelconque des revendications 6 à 8, dans lequel ledit deuxième actionneur thermosensible et son interface associée au levier de déclenchement de la commande d'ébullition sont formés sous la forme de fixations à pince.

10. Appareil sans fil de chauffage de liquide selon l'une quelconque des revendications 1 à 9, dans lequel lesdits moyens de coopération comprennent un composant mobile monté sur le fond de la partie de cuve à l'intérieur de cette dernière, ledit composant étant sélectivement mobile en actionnant des moyens de sélection dans la base d'alimentation (60) afin de déterminer la capacité dudit deuxième actionneur thermosensible à actionner lesdits moyens de commutateur.
